# EUROPEAN PATENT APPLICATION

(11) **EP 3 858 950 A1**
(43) Date of publication of application: **04.08.2021**
(21) Application number: 20154881.5
(22) Date of filing: 31.01.2020
(51) Int. Cl.: C10B 49/06, C10B 53/02, C10K 1/04, C10K 3/00, C10K 3/02

(54) **A PYROLYSIS SYSTEM, A METHOD FOR PRODUCING PURIFIED PYROLYSIS GAS AND PYROLYSIS LIQUIDS AND USE OF A PYROLYSIS SYSTEM**

(71) Applicant: Danmarks Tekniske Universitet, 2800 Kgs. Lyngby (DK)
(72) Inventor: HENRIKSEN, Ulrik Birk, 2860 Søborg (DK); AHRENFELDT, Jesper, 3300 Frederiksværk (DK)
(74) Representative: Patentgruppen A/S

(57) **Abstract**

Disclosed is a pyrolysis system (1) comprising a pyrolysis reactor (2) arranged for producing pyrolysis gas and a first condensing unit (3) arranged to cool the pyrolysis gas to a first temperature to condense a first pyrolysis liquid (20). The system further comprises a second condensing unit (4) arranged to cool the pyrolysis gas to a second temperature to condense a second pyrolysis liquid (21), wherein the first temperature is higher than the second temperature. The system also comprises a return conduit (5) arranged to guide a portion of the pyrolysis gas back into the pyrolysis reactor (2) to drive the pyrolysis process, and heating means (6) arranged to increase the temperature of the portion of the pyrolysis gas before it reenters the pyrolysis reactor (2). The pyrolysis reactor (2) is a fixed bed counterflow pyrolysis reactor (2) comprising a pyrolysis gas outlet (7) arranged at an upper part (8) of the pyrolysis reactor (2) through which the produced pyrolysis gas leaves the pyrolysis reactor (2), a pyrolysis gas inlet (9) arranged at a lower part (10) of the pyrolysis reactor (2), through which the heated pyrolysis gas reenters the pyrolysis reactor (2), a feedstock inlet (11) arranged at the upper part (8) of the pyrolysis reactor (2) through which feedstock (19) enters the pyrolysis reactor (2) and a char outlet (12) arranged at the lower part (10) of the pyrolysis reactor (2), through which char produced in the pyrolysis reactor (2) leaves the pyrolysis reactor (2).

Furthermore, a method for producing producing purified pyrolysis gas and pyrolysis liquids and use of a pyrolysis system (1) is disclosed.

## Description

### Field of the invention

The invention relates to a pyrolysis system comprising a pyrolysis reactor arranged for producing pyrolysis gas and a first and second condensing unit arranged to cool the pyrolysis gas to condense a first and second pyrolysis liquid. The invention further relates to a method for producing purified pyrolysis gas and pyrolysis liquids and use of a pyrolysis system.

### Background of the invention

Producing biogas from biomass, coal or other is well known in the art e.g. by means of pyrolysis. However, pyrolysis gas has relatively high content of tar and other unwanted substances and the pyrolysis gas therefore has to undergo some sort of treatment to make it usable.

Thus, from US 9,611,439 B1 it is known to run biomass into a fluid bed pyrolizer to produce pyrolysis gas and then run the pyrolysis gas through a number of condensation stages to condensate different substances and thereby remove them from the pyrolysis gas. However, such a setup is inefficient and difficult to realize.

It is therefore an object of the present invention to provide for a cost-efficient technique for producing purified pyrolysis gas and pyrolysis liquids.

### The invention

The invention provides for a pyrolysis system comprising a pyrolysis reactor arranged for producing pyrolysis gas and a first condensing unit arranged to cool the pyrolysis gas to a first temperature to condense a first pyrolysis liquid. The system further comprises a second condensing unit arranged to cool the pyrolysis gas to a second temperature to condense a second pyrolysis liquid, wherein the first temperature is higher than the second temperature. The system also comprises a return conduit arranged to guide a portion of the pyrolysis gas back into the pyrolysis reactor to drive the pyrolysis process, and heating means arranged to increase the temperature of the portion of the pyrolysis gas before it reenters the pyrolysis reactor. The pyrolysis reactor is a fixed bed counterflow pyrolysis reactor comprising a pyrolysis gas outlet arranged at an upper part of the pyrolysis reactor through which the produced pyrolysis gas leaves the pyrolysis reactor, a pyrolysis gas inlet arranged at a lower part of the pyrolysis reactor, through which the heated pyrolysis gas reenters the pyrolysis reactor, a feedstock inlet arranged at the upper part of the pyrolysis reactor through which feedstock enters the pyrolysis reactor and a char outlet arranged at the lower part of the pyrolysis reactor, through which char produced in the pyrolysis reactor leaves the pyrolysis reactor.

When producing pyrolysis gas by means of a fixed bed counterflow pyrolysis reactor the biomass is introduced from the top and hot gas is guided up through the gas from the bottom. Thus, the produced pyrolysis gas is cooled when traveling up through the colder biomass. In this way the pyrolysis gas is relatively cool when it when it leaves the pyrolysis reactor - typically between 150 to 250 degrees Celsius or even lower. This is advantageous in that the risk of sedimentation or settling of tar and other substances in the pyrolysis gas before these substances are condensed is reduced due to the lower viscosity of these substances at this temperature range. Furthermore, the system also becomes more efficient because less cooling is needed to condensate the substances. And recirculating the pyrolysis gas to drive the pyrolysis process in the pyrolysis reactor is advantageous in that this gas is readily available, it is oxygen-free or has a very low content of oxygen and it is already hot and therefore it does not need to be heated much before it reenters the pyrolysis reactor - all of which ensures a more cost-efficient pyrolysis system.

In this context, the term "fixed bed counterflow pyrolysis reactor" should be understood as any kind of unit capable of running a fixed bed counterflow pyrolysis process. Pyrolysis is a thermochemical decomposition of organic material or fossil fuel at elevated temperatures in the absence of oxygen (or any halogen). Pyrolysis involves the simultaneous change of chemical composition and physical phase and is irreversible. Pyrolysis is a type of thermolyzes and is most commonly observed in organic materials exposed to high temperatures typically starting at 200-300°C and up to 500C or even higher. In general, pyrolysis of organic substances or fossil fuels produces gas and liquid products and leaves a solid residue richer in carbon content, which in this embodiment is referred to as pyrolysis coke but is also often referred to as pyrolysis char. The term "counterflow" (pyrolysis reactor) is to be understood as any kind of pyrolysis reactor where the hot gas is being fed in the bottom of the pyrolysis reactor to drive the pyrolysis process and the resulting gas is drawn from the top of the pyrolysis reactor, while the feedstock is fed at the top of the pyrolysis reactor so that the closer the feedstock moves to the bottom of the pyrolysis reactor the more processed it is. I.e. fuel and gas moves in opposite directions - hence "counterflow" which is also often referred to as "updraft", "upward draft", "counter-current" and other. The term "fixed bed" is a known pyrolysis principle in which the feedstock is pyrolyzed by hot gas oozing up through a "solid" pile of feedstock - as opposed to in a fluidized bed reactor where the hot gas is flowing so fast that the feedstock becomes airborne during the pyrolysis process. However, it should be noticed that while the term "fixed bed" excludes pyrolyzing airborne feedstock, the term does also cover embodiments where the fixed bed of feedstock relatively slowly travels downwards as the bottom part of the feedstock pile is turned to coke or char by the pyrolysis process and is removed as it is formed. This "moving bed" design is a specie of the generic term "fixed bed".

In an aspect, the pyrolysis system further comprises a deoxygenation unit and wherein the deoxygenation unit is arranged to deoxygenate the pyrolysis gas before it enters the first condensing unit.

It is advantageous to deoxygenate the pyrolysis gas before it enters the condensing units in that this will increase the quality of the gas and thereby the gas yield and at least to some degree also increase the quality of the condensed substances depending on the condensation process.

In this context the term "Deoxygenation" refers to a chemical reaction involving the removal of oxygen atoms from a molecule. I.e. the term refers to the removal of molecular oxygen (O2) from the pyrolysis gases and solvents. Deoxygenation can e.g. take place by adding oxygen in some form to pyrolysis gas in a partial oxidation process which will end up deoxygenating the gas, by means of a catalytic process, by means of an oxygen membrane or other.

In an aspect, the deoxygenation unit comprises a partial oxidation unit.

Deoxygenating the pyrolysis gas by means of partial oxidation is advantageous in that the partial oxidation process is a relatively simple and inexpensive way of increasing the quality of the gases and solvents produced in the pyrolysis reactor.

It should be noted that the term "partial oxidation" in this context means that some oxygen is added to the pyrolysis gas but not enough to fully combust the pyrolysis gas completely. I.e. an embodiment enough oxygen is added to combust e.g. 35% of the pyrolysis gas.

In an aspect, the pyrolysis system further comprises an aerosol removal unit arranged to remove aerosol from pyrolysis gas leaving the second condensing unit.

Aerosols in the pyrolysis gas can settle on pipe wall, in tanks or elsewhere and are in general unwanted in relation to optimal operation of the pyrolysis system and subsequent utilization of the pyrolysis gas. Thus, it is advantageous to arrange an aerosol removal unit at least after the second condensing unit.

In this context the term "aerosol" means a suspension of fine solid particles or liquid droplets in the pyrolysis gas. The liquid or solid particles have diameters typically less than 1 µm. I.e. aerosols are micron and submicron liquid droplets of organic compounds that either have too high a boiling point to evaporate in the pyrolyze reactor or have condensed from vapor after leaving the reactor because the gas stream has cooled. Aerosols tend to consist of carbohydrates, highly substituted phenolic compounds, lignin oligomers etc.

Thus, an "aerosol removal unit" is any type of aerosol remover capable of removing such very fine droplets or particles from the gas flow, such as any kind of electrostatic precipitator, impactors, horizontal elutriators, pore membrane filters and other.

In an aspect, the first condensing unit is arranged to cool the pyrolysis gas to a first temperature being above the dew point of water and wherein the second condensing unit is arranged to cool the pyrolysis gas to a second temperature being below the dew point of water.

By arranging the the first condensing unit to cool the pyrolysis gas to a first temperature above the dew point of water it is ensured that water is not condensed in the first condensing unit to produce a valuable first pyrolysis liquid. However, to increase the usability and purity of the pyrolysis gas, also the water has to be removed from the produced pyrolysis gas and it is therefore advantageous to arrange the second condensing unit to cool the pyrolysis gas to a second temperature below the dew point of water.

It should be noted that the actual dew point of water obviously is dependent on the system pressure - i.e. if the pyrolysis system is arranged to operate at around atmospheric pressure, the dew point of water will be at one level and if the pyrolysis system is arranged to operate at a pressure higher than atmospheric pressure, the dew point of water will be at another level. However, the skilled person will know the actual dew point of water at given pressures.

In an aspect, the heating means is arranged to increase the temperature of the pyrolysis gas to between 200°C and 1,200°C, preferably between 400°C and 1,000°C and most preferred between 450°C and 700°C before it reenters the pyrolysis reactor.

If the pyrolysis gas is too cold when it reenters the pyrolysis reactor the pyrolysis process will run slow and inefficient. However, if the pyrolysis gas is too hot when it reenters the pyrolysis reactor, the pyrolysis reactor may be damaged. Thus, the present temperature ranges present an advantageous relationship between efficiency and equipment safety.

In an aspect, the pyrolysis system further comprises flow generating means arranged to drive the portion of the pyrolysis gas through the heating means and further into the pyrolysis reactor and wherein the pyrolysis system also comprises control means arranged to control the flow generating means so that the volume flow rate of the pyrolysis gas is controlled in dependency of input from a temperature measuring device arranged to measure the temperature of the pyrolysis gas at the upper part of the pyrolysis reactor.

Controlling the volume flow rate of the reentered pyrolysis gas in dependency of the temperature of the pyrolysis gas at the upper part of the pyrolysis reactor is advantageous in that this present a simple and efficient way of ensuring more uniform pyrolysis gas and of ensuring that the temperature of the pyrolysis gas leaving the pyrolysis reactor is at a desirable low level to ensure efficient condensation in the subsequent condensation processes.

It should be noted that the term "flow generating means" in this context should be understood as any type of flow generator capable of driving at least a portion of the pyrolysis gas through the heating means - e.g. any kind of fan, pump, flow driver or other.

It should also be noted that the term "heating means" in this context should be understood as any type of heater capable of increasing the temperature of the pyrolysis gas, such as any kind of combustion heater, heat exchanger, electrical heater or other.

Further, it should be noted that the term "control means" in this context should be understood as any type of controller capable of controlling operations of the pyrolysis system, such as any kind of computer, programmable logic controller (PLC), logical circuit or other.

In an aspect, the pyrolysis gas outlet is connected to filtering means arranged to separate particles from pyrolysis gas flowing out through the pyrolysis gas outlet.

It is advantageous to filter the pyrolysis gas in that the risk of unwanted particle buildup in the system is hereby reduced.

In this context, the term "filtering means" is to be understood as any kind of filter suitable for separating particles from the pyrolysis gas leaving the pyrolysis reactor - i.e. any kind of cyclone, sieve, strainer or another device for cleaning the pyrolysis gas flow.

In an aspect, between 1% and 95%, preferably between 5% and 70% and most preferred between 10% and 50% - such as between 20% to 30% - of the pyrolysis gas produced by the feedstock in the pyrolysis reactor is circulated back into the pyrolysis reactor to form a flow of pyrolysis gas up through the feedstock.

If too much or too little of the pyrolysis gas is circulated back into the pyrolysis reactor, the pyrolysis reactor will run more inefficiently. Thus, the present amount ranges will ensure higher efficiency.

The invention also provides for a method for producing purified pyrolysis gas and pyrolysis liquids, the method comprising the steps of:
- feeding feedstock to a fixed bed counterflow pyrolysis reactor through a feedstock inlet arranged at an upper part of the pyrolysis reactor,
- guiding pyrolysis gas produced by the pyrolysis reactor out of the pyrolysis reactor through a pyrolysis gas outlet arranged at an upper part of the pyrolysis reactor and further through a first condensing unit in which the pyrolysis gas is cooled to a first temperature at which a first pyrolysis liquid is condensed,
- guiding pyrolysis gas from the first condensing unit through a second condensing unit to cool the pyrolysis gas to a second temperature at which a second pyrolysis liquid is condensed, wherein the first temperature is higher than the second temperature,
- heating a portion of the pyrolysis gas,
- guiding the heated pyrolysis gas back into the pyrolysis reactor through a pyrolysis gas inlet arranged at a lower part of the pyrolysis reactor,
- guiding char out of the pyrolysis reactor through a char outlet arranged at the lower part of the pyrolysis reactor.

Forming the pyrolysis gas in a fixed bed counterflow pyrolysis reactor and subsequently condensing pyrolysis liquids in at least two stages at different temperatures is advantageous in that the fixed bed counterflow pyrolysis ensures a relative low temperature of the pyrolysis gas ensuring that the risk of settling of unwanted substances in the system before and in the condensers is reduced and it ensures that the pyrolysis liquids can be condensed at a better quality. Thus, ensuring both better pyrolysis liquids and more pure pyrolysis gas. And by using produced pyrolysis gas to drive the pyrolysis process in the pyrolysis reactor a more simple and efficient process is achieved.

It should be noticed that the above listing of method step is not limited to a specific order. It should particularly be noted that the drawing, heating and reentering a porting of the pyrolysis gas can be done at different stages of the process - i.e. both before or after the condensation process.

In an aspect the above method is performed by means of a pyrolysis system according to any of the previously discussed pyrolysis systems.

The invention further provides for use of a pyrolysis system according to any of the previously discussed pyrolysis systems for pyrolyzing biomass.

Pyrolyzing and/or gasification of biomass is problematic in relation to tar content in the resulting gas and it is therefore particularly advantageous to use the present invention in relation to pyrolyzing and/or gasification of biomass.

It should be emphasised that the term "biomass" in this context should be understood as any kind of plant or animal material suitable for energy conversion in a fixed bed counterflow pyrolysis reactor of a pyrolysis system according to the present invention. Thus, the term covers any kind of chipped, pelletized or whole wood, nut shell, pip, peat, grain or other biomass materials that will not cake when being fed down into the reactor and thereby allowing the hot pyrolysis gas to flow substantially evenly and well distributed up through the biomass in the reactor.

### Figures

The invention will be described in the following with reference to the figures in which
- fig. 1: illustrates a pyrolysis system where pyrolysis gas is recycled before the condensation stages, and
- fig. 2: illustrates a pyrolysis system where pyrolysis gas is recycled after the condensation stages, and
- fig. 3: illustrates a pyrolysis system comprising a deoxygenation unit.

### Detailed description

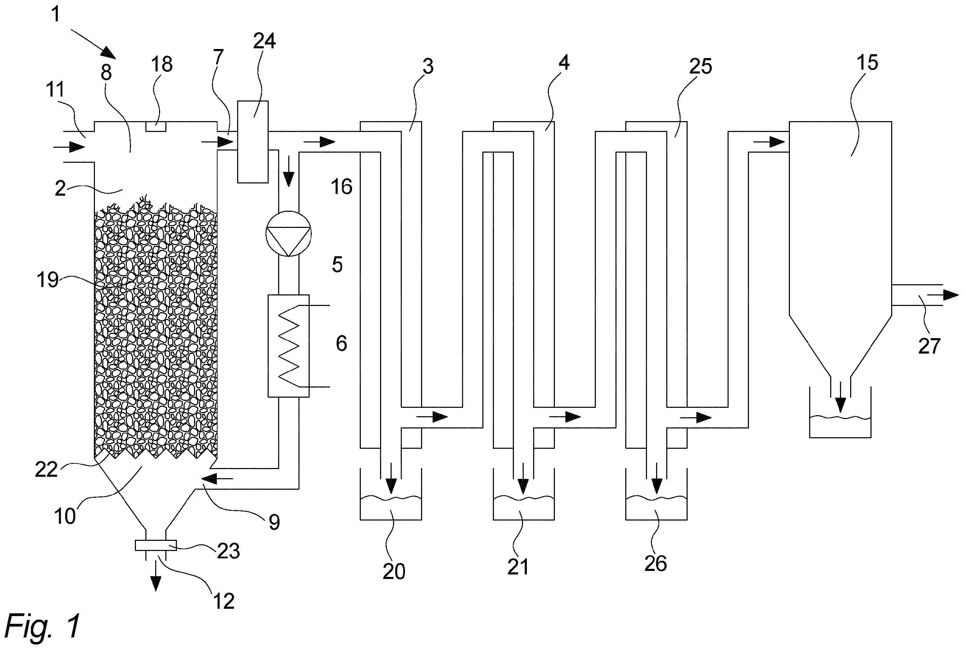

Fig. 1 illustrates a pyrolysis system 1 where pyrolysis gas is recycled before the condensation stages.

In this embodiment feedstock 19 is guided into the pyrolysis reactor 2 through a feedstock inlet 11 at an upper part 8 of the pyrolysis reactor 2.

It should be noticed that any reference to orientation throughout this document - such as upper, lower, up, down etc. - relates to the orientation of the system 1 during normal use under normal circumstances.

In this embodiment, the feedstock 19 is wood chips but in another embodiment the feedstock 19 could be nut shells, corn cops, fruit pips or stones, grains, pelletized straw material or any other type of biomass or it could surplus material from biochemical production or food production, treaded or torn waste material or any other form of organic material, plastic material or fossil fuel that can be used for energy conversion in a pyrolysis system 1.

At the top 8 of the pyrolysis reactor 2 the operation temperature will typically be around 150-250°C but as the feedstock 19 moves downwards inside the pyrolysis reactor 2 the temperature rises to 500°C or more at the bottom 6 of the pyrolysis reactor 2. At the lower part 10 of the pyrolysis reactor 2 the feedstock 19 is transformed into pyrolyzed char (also called coke) and it will fall through a grate device 22 on which the feedstock 19 rests in the pyrolysis reactor 2 and continue out of the pyrolysis reactor 2 through the char outlet 12. In this embodiment the grate device 22 is formed by a number of transversal profiles that can be moved to incite the char to fall through at a slow pace to avoid un-pyrolyzed feedstock to fall through. However, in another embodiment the grate device 22 could also or instead comprise one or more passive grates and/or it could also or instead comprise other forms of moving grate elements.

Although the feedstock 19 is moving slowly downwards as it is being pyrolyzed in the reactor 1 this reactor 2 still falls under the term "a fixed bed counterflow pyrolysis reactor" 2 in that a fixed bed of feedstock 19 is continuously maintained in the reactor 2. This type of reactor 2 is also sometimes referred to as a moving bed reactor 2.

In this embodiment the char outlet 12 comprises a sluice device 23 arranged to allow the generated char to move downwards and out of the reactor 2, while at the same time ensuring that gas does not escape. In this embodiment the sluice device 23 is a gas lock but in another embodiment the sluice device 23 could also or instead comprise a register, a gate, a lock or other.

In the pyrolysis reactor 2 the produced pyrolysis gas will travel upwards and leave the pyrolysis reactor 2 through the pyrolysis gas outlet 7. From there most of the pyrolysis gas continues into the condensation stages while a portion of the pyrolysis gas drawn into a return conduit 5 by means of flow generating means 16 and further through heating means 6 in which the gas is heated to a temperature of 500 - 600 degrees Celsius before reentering the pyrolysis reactor 2 at the lower part 10 of the reactor 2. In this embodiment the flow generating means 16 comprises a fan but in another embodiment the flow generating means 16 could comprise a pump or another type of flow generator. Or, in another embodiment the flow of pyrolysis gas through the pyrolysis system 1 could also or instead be driven by the pressure generated by the pyrolysis process in the pyrolysis reactor 2.

In this embodiment, the heated pyrolysis gas reenters the pyrolysis reactor 2 through a pyrolysis gas inlet 9 arranged at the lower part 10 of the reactor 2 just below the grate device 22 but in another embodiment the pyrolysis gas inlet 9 could be arranged just above the grate device 22 or several pyrolysis gas inlets 9 could be arranged below and/or just above the grate device 22 e.g. to distribute the heated pyrolysis gas more evenly in the feedstock 19.

In this embodiment of the invention the pyrolysis system 1 further comprises filtering means 20 arranged immediately after the pyrolysis gas outlet 7 in which dust and minor particles are removed from the gas. In this embodiment the filtering means 20 are arranged immediately after the pyrolysis gas outlet 7 but in another embodiment it could also or instead be arranged after the condensation stages, between the stages or elsewhere in the system 1.

In this embodiment, the recycled pyrolysis gas is heated by means of heating means 6 in the form of a heat exchanger 6 enabling that the pyrolysis gas is being heated by exchanging heat with an external hot fluid but in another embodiment the heating means 6 could heat the recycled pyrolysis gas by partial oxidation or by means of another internal heat source - such as combustion of the finished gas product - or by means of another external heat source.

In this embodiment the part of the pyrolysis gas that is not recycled will continue into a first condensing unit 3 in which the pyrolysis gas is cooled to a first temperature to condense a first pyrolysis liquid 20. From there the pyrolysis gas continues into a second condensing unit 4 in which the pyrolysis gas is cooled to a second temperature to condense a second pyrolysis liquid 21 and from there the pyrolysis gas continues into a third condensing unit 25 in which the pyrolysis gas is cooled to a third temperature to condense a third pyrolysis liquid 26. Different substances in the pyrolysis gas will condense at different temperatures and the more condensation stages operating at different gradually decreasing temperatures the purer pyrolysis liquids can be produced in the condensation process. Most of the substances in the pyrolysis gas will have a condensation temperature above the dew point of water and it is therefore advantageous that at least the first condensing unit 3 will cool the pyrolysis gas a first temperature above the dew point of water to produce a first pyrolysis liquid 20 being free of water. However, the pyrolysis of the feedstock 19 will produce a large amount of steam which has to be removed from the pyrolysis gas before the gas can be used for heating, as a liquid fuel or other and it is therefore advantageous that the condensation process comprises a second condensing unit 4 in which the pyrolysis gas is cooled to a second temperature below the dew point of water to condense a second pyrolysis liquid 21 which will contain a lot of water. In this embodiment the gas will further pass through a third condensing unit 25 in which the pyrolysis gas is cooled to a third temperature further below the dew point of water to condense a third pyrolysis liquid 26 consisting of substances having a dew point further below the dew point of water. Thus, in this embodiment the pyrolysis system 1 comprises three independent condensation stages 3, 4, 25 but in another embodiment the pyrolysis system 1 would only comprise the first condensing unit 3 and the second condensing unit 4 or the pyrolysis system 1 would comprise more than three condensation stages such as four, five, six or even more.

In this embodiment the pyrolysis gas leaving the last condensation stage 25 will continue into an aerosol removal unit 15 arranged to remove aerosol from the pyrolysis gas. In this embodiment the aerosol removal unit 15 comprises a wet electrostatic precipitator but in another embodiment the aerosol removal unit 15 could also or instead comprise multiple vortex chambers, a dry electrostatic precipitator or other.

In this embodiment the aerosol removal unit 15 is only arranged after the last condensation stage 25 but in another embodiment the pyrolysis system 1 could also or instead comprise an aerosol removal unit 15 before the first condensation stage 3 or after each condensation stage 3, 4, 25.

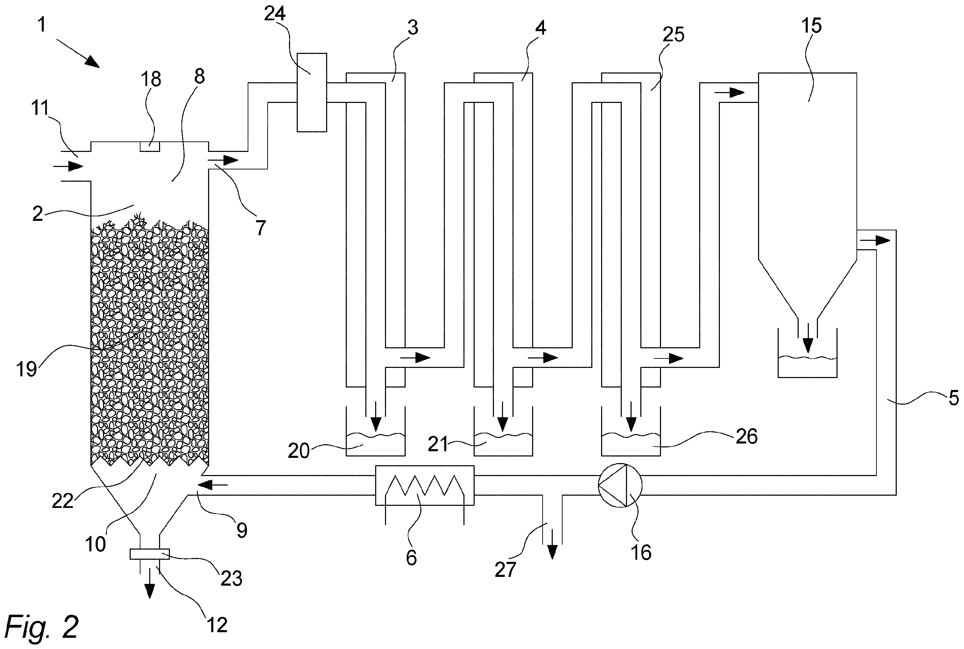

Fig. 2 illustrates a pyrolysis system 1 where pyrolysis gas is recycled after the condensation stages 3, 4, 25.

In this embodiment the pyrolysis gas leaving the pyrolysis reactor 2 is guided through the condensation stages 3, 4, 25 and the aerosol removal unit 15. From the aerosol removal unit 15 the now purified gas enters the return conduit 5 where a portion of the purified gas is heated before it reenters the pyrolysis reactor 2.

In the embodiment disclosed in fig. 1 the purified pyrolysis gas leaving the aerosol removal unit 15 leaves the pyrolysis system 1 through an output gas outlet 27 and in this embodiment the output gas outlet 27 is arranged in the return conduit 5 between the flow generating means 16 and the heating means 6. However, in another embodiment the output gas outlet 27 could be arranged after the last condensation stage, elsewhere on the return conduit 5 or somewhere else in the pyrolysis system 1.

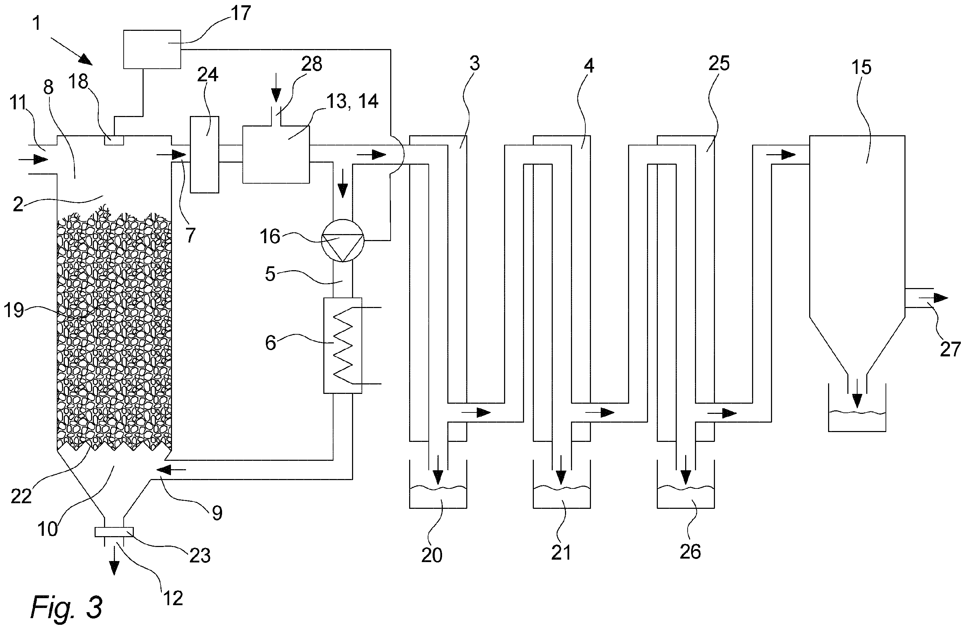

Fig. 3 illustrates a pyrolysis system 1 comprising a deoxygenation unit 13.

In this embodiment the pyrolysis gas is first lead through a deoxygenation unit 13 before it enters the condensation stages 3, 4, 25. In this embodiment the deoxygenation unit 13 is a partial oxidation unit 14 but in another embodiment the deoxygenation could also or instead take place through a catalytic process.

In the partial oxidation unit 14 the pyrolysis gas is partially oxidized in that air, oxygen enriched air, a mixture of oxygen and CO2 or other or pure oxygen is added to the pyrolysis gas through the oxidation inlet 28 so that a part of the pyrolysis gas is combusted, which in turn will raise the temperature of the gas. This temperature elevation and the partial combustion process will among other ensure an advantageous tar decomposition.

In this embodiment enough oxygen is added to combust approximately 35% of the pyrolysis gas. However, in another embodiment the partial oxidation involves adding enough oxygen to combust all the pyrolysis gas between 10% and 60%, preferably between 25% and 50%. The present amount ranges are advantageous in relation to tar decomposition.

In this embodiment the pyrolysis system 1 comprises control means 17 arranged to control the flow generating means 16 so that the volume flow rate of the pyrolysis gas is controlled in dependency of input from a temperature measuring device 18 arranged in the upper part 8 of the pyrolysis reactor 2 to measure the temperature of the pyrolysis gas at the upper part 8 of the pyrolysis reactor 2. Thus, if the temperature of the pyrolysis gas in the upper part 8 of the pyrolysis reactor 2 becomes too low the control means 17 will increase the volume flow rate of the hot reentered pyrolysis gas and if the temperature of the pyrolysis gas in the upper part 8 of the pyrolysis reactor 2 becomes too high the control means 17 will decrease the volume flow rate of the hot reentered pyrolysis gas. However, in another embodiment the control means 17 could also or instead be arranged to control the temperature of the pyrolysis gas at the upper part 8 of the pyrolysis reactor 2 by controlling the feedstock level in the pyrolysis reactor 2, by controlling to which temperature the recycled pyrolysis gas is heated by the heating means, by controlling the pressure in the pyrolysis system by means of a reduction valve (not shown) or other.

The invention has been exemplified above with reference to specific examples of pyrolysis reactors 2, condensing units 3, 4, 25, aerosol removal units 15 and other. However, it should be understood that the invention is not limited to the particular examples described above but may be designed and altered in a multitude of varieties within the scope of the invention as specified in the claims.

### List

- 1.: Pyrolysis system
- 2.: Pyrolysis reactor
- 3.: First condensing unit
- 4.: Second condensing unit
- 5.: Return conduit
- 6.: Heating means
- 7.: Pyrolysis gas outlet
- 8.: Upper part of pyrolysis reactor
- 9.: Pyrolysis gas inlet
- 10.: Lower part of pyrolysis reactor
- 11.: Feedstock inlet
- 12.: Char outlet
- 13.: Deoxygenation unit
- 14.: Partial oxidation unit
- 15.: Aerosol removal unit
- 16.: Flow generating means
- 17.: Control means
- 18.: Temperature measuring device
- 19.: Feedstock
- 20.: First pyrolysis liquid
- 21.: Second pyrolysis liquid
- 22.: Grate device
- 23.: Sluice device
- 24.: Filtering means
- 25.: Third condensing unit
- 26.: Third pyrolysis liquid
- 27.: Output gas outlet
- 28.: Oxidation inlet

## Claims

1. A pyrolysis system (1) comprising,
a pyrolysis reactor (2) arranged for producing pyrolysis gas,
a first condensing unit (3) arranged to cool said pyrolysis gas to a first temperature to condense a first pyrolysis liquid (20),
a second condensing unit (4) arranged to cool said pyrolysis gas to a second temperature to condense a second pyrolysis liquid (21), wherein said first temperature is higher than said second temperature,
a return conduit (5) arranged to guide a portion of said pyrolysis gas back into said pyrolysis reactor (2), and
heating means (6) arranged to increase the temperature of said portion of said pyrolysis gas before it reenters said pyrolysis reactor (2),
wherein said pyrolysis reactor (2) is a fixed bed counterflow pyrolysis reactor (2) comprising a pyrolysis gas outlet (7) arranged at an upper part (8) of said pyrolysis reactor (2) through which said produced pyrolysis gas leaves said pyrolysis reactor (2), a pyrolysis gas inlet (9) arranged at a lower part (10) of said pyrolysis reactor (2), through which said heated pyrolysis gas reenters said pyrolysis reactor (2), a feedstock inlet (11) arranged at said upper part (8) of said pyrolysis reactor (2) through which feedstock (19) enters said pyrolysis reactor (2) and a char outlet (12) arranged at said lower part (10) of said pyrolysis reactor (2), through which char produced in said pyrolysis reactor (2) leaves said pyrolysis reactor (2).

2. A pyrolysis system (1) according to claim 1, wherein said pyrolysis system (1) further comprises a deoxygenation unit (13) and wherein said deoxygenation unit (13) is arranged to deoxygenate said pyrolysis gas before it enters said first condensing unit (3).

3. A pyrolysis system (1) according to claim 2, wherein said deoxygenation unit (13) comprises a partial oxidation unit (14).

4. A pyrolysis system (1) according to any of the preceding claims, wherein said pyrolysis system (1) further comprises an aerosol removal unit (15) arranged to remove aerosol from pyrolysis gas leaving said second condensing unit (4).

5. A pyrolysis system (1) according to any of the preceding claims, wherein said first condensing unit (3) is arranged to cool said pyrolysis gas to a first temperature being above the dew point of water and wherein said second condensing unit (4) is arranged to cool said pyrolysis gas to a second temperature being below the dew point of water.

6. A pyrolysis system (1) according to any of the preceding claims, wherein said heating means (6) is arranged to increase the temperature of said pyrolysis gas to between 200°C and 1,200°C, preferably between 400°C and 1,000°C and most preferred between 450°C and 700°C before it reenters said pyrolysis reactor (2).

7. A pyrolysis system (1) according to any of the preceding claims, wherein said pyrolysis system (1) further comprises flow generating means (16) arranged to drive said portion of said pyrolysis gas through said heating means (6) and further into said pyrolysis reactor (2) and wherein said pyrolysis system (1) also comprises control means (17) arranged to control said flow generating means (16) so that the volume flow rate of said pyrolysis gas is controlled in dependency of input from a temperature measuring device (18) arranged to measure the temperature of the pyrolysis gas at said upper part (8) of said pyrolysis reactor (2).

8. A method for producing purified pyrolysis gas and pyrolysis liquids, said method comprising the steps of:
• feeding feedstock (19) to a fixed bed counterflow pyrolysis reactor (2) through a feedstock inlet (11) arranged at an upper part (8) of said pyrolysis reactor (2),
• guiding pyrolysis gas produced by said pyrolysis reactor (2) out of said pyrolysis reactor (2) through a pyrolysis gas outlet (7) arranged at an upper part (8) of said pyrolysis reactor (2) and further through a first condensing unit (3) in which said pyrolysis gas is cooled to a first temperature at which a first pyrolysis liquid (20) is condensed,
• guiding pyrolysis gas from said first condensing unit (3) through a second condensing unit (4) to cool said pyrolysis gas to a second temperature at which a second pyrolysis liquid (21) is condensed, wherein said first temperature is higher than said second temperature,
• heating a portion of said pyrolysis gas,
• guiding said heated pyrolysis gas back into said pyrolysis reactor (2) through a pyrolysis gas inlet (9) arranged at a lower part (10) of said pyrolysis reactor (2),
• guiding char out of said pyrolysis reactor (2) through a char outlet (12) arranged at said lower part (10) of said pyrolysis reactor (2).

9. A method according to claim 8, wherein said method is performed by means of a pyrolysis system (1) according to any of claim 1-7.

10. Use of a pyrolysis system (1) according to any of claim 1-7 for pyrolyzing biomass.
